# FASCICULE DE BREVET EUROPEEN

(11) **EP 2 218 161 B1**
(45) Date de publication et mention de la délivrance du brevet: **14.03.2012**
(21) Numéro de dépôt: 08846895.4
(22) Date de dépôt: 07.11.2008
(51) Int. Cl.: H02M 1/14, H01L 41/04, F02D 41/20

(54) **DISPOSITIF DE COMMANDE D'INJECTEUR PIEZOELECTRIQUE ULTRASONORE**
VORRICHTUNG ZUR STEUERUNG EINES PIEZOELEKTRISCHEN ULTRASCHALLINJEKTORS
DEVICE FOR CONTROLLING AN ULTRASOUND PIEZOELECTRIC INJECTOR

(30) Priorité: 08.11.2007 FR 0758891
(43) Date de publication de la demande: 18.08.2010
(73) Titulaire: Renault S.A.S., 92100 Boulogne-Billancourt (FR)
(72) Inventeur: BARROSO, Paulo, 78130 Les Mureaux (FR); NOUVEL, Clément, 92140 Clamart (FR)
(86) Numéro de dépôt international: PCT/EP2008/065159
(87) Numéro de publication internationale: WO 2009/060079

(56) Documents cités:
- EP-A- 1 398 487
- WO-A-96/28878
- DE-A1- 10 150 414
- FR-A- 2 899 737

## Description

La présente invention concerne un dispositif de commande d'injecteur piézoélectrique ultrasonore.

Un injecteur piézoélectrique ultrasonore est un injecteur de carburant utilisable dans un moteur à combustion interne. Il fonctionne selon un principe décrit, par exemple, dans le brevet FR 2 801 346. Au regard de sa commande, il se présente comme un dipôle électrique et nécessite de se voir imposer entre ses deux bornes une tension alternative de haute amplitude, afin de produire une résonance mécanique, et ainsi de réaliser une injection de carburant, durant tout le temps de l'application de ladite tension alternative.

Un tel injecteur piézoélectrique ultrasonore nécessite une électronique de commande, telle que celle de FR 2 849 255, capable de le commander en générant des trains d'impulsion de tension, un train d'impulsion débutant avec le début de la phase d'injection du moteur à combustion pour ledit injecteur et se terminant avec la fin de ladite phase d'injection.

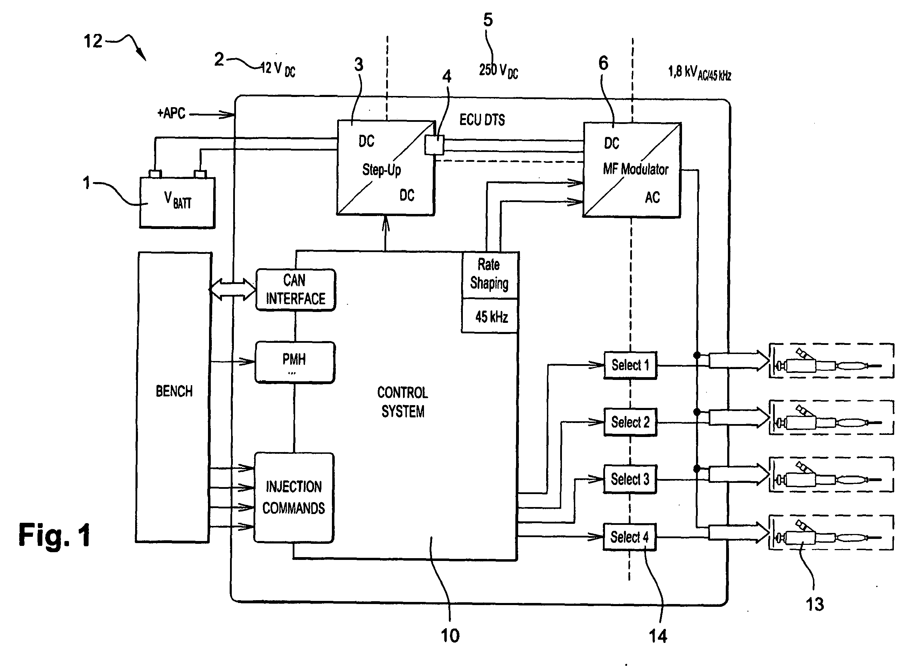

En se référant à la figure 1 est présenté un mode de réalisation d'un tel dispositif de commande 12. Ce dispositif de commande 12 comprend un générateur de train d'impulsion de tension 11 et un sélecteur 14 d'injecteur permettant d'aiguiller le train d'impulsion généré vers un injecteur 13 déterminé au choix. Le générateur de train d'impulsion de tension 11 comprend une source de tension 1, un convertisseur courant continu / courant continu, noté convertisseur DC/DC 3, un convertisseur courant continu / courant alternatif, noté convertisseur DC/AC 6 et une unité de commande 10. La source de tension 1 fourni une tension initiale 2 continue au convertisseur DC/DC 3. Le dit convertisseur DC/DC 3 est apte à charger une capacité 4, disposée à sa sortie, selon une tension intermédiaire 5 continue, supérieure à la tension initiale 2. A titre indicatif si la tension initiale 2 issue de la batterie/réseau véhicule est sensiblement égale à 12V, la tension intermédiaire 5 au niveau de la capacité 4 peut être de l'ordre de 250V. Le convertisseur DC/AC 6 est alimenté à partir de la tension intermédiaire 5. Ce dernier fonctionnant selon le principe du découpage, en alternant des phases actives 7 et des phases inactives 8, est apte à transformer la tension intermédiaire 5 en une tension alternative finale 9 d'amplitude encore augmentée. Si la tension intermédiaire 5 est de l'ordre de 250V, la tension finale ou amplitude du train d'impulsion de tension final 9 peut atteindre entre 1,2 et 1,8kV. Un injecteur 13 injecte lorsqu'il reçoit ladite tension alternative finale 9. Cette dernière tension est produite lorsque l'injecteur 13 est en phase d'injection. Elle est ensuite interrompue, par exemple en arrêtant le pilotage du découpage du convertisseur DC/AC 6, entre deux phases d'injection. La tension finale se présente ainsi sous forme d'une succession de trains d'impulsion de tension, séparés par des phases de tension nulle. Une unité de commande 10 assure le pilotage des convertisseurs 3, 6 et notamment la commande de découpage.

Le principe de conception d'un tel générateur de train d'impulsion de tension 11, avec deux convertisseurs 3, 6 en cascade, rend complexe pour des raisons de stabilité, un fonctionnement simultané du convertisseur DC/DC 3 et du convertisseur DC/AC 6. Soit le convertisseur DC/DC 3 fonctionne et charge la capacité 4, soit le convertisseur DC/AC 6 fonctionne et provoque ainsi une décharge de ladite capacité 4. Ceci n'est pas préjudiciable à l'application de commande d'injecteurs, puisque le signal alternatif final ou train d'impulsion de tension final 9 n'a pas a être produit en continu, et les phases hors injection où le convertisseur DC/AC 6 ne fonctionne pas, peuvent être mises à profit pour faire fonctionner le convertisseur DC/DC 3, afin de recharger la capacité 4.

Cependant un tel principe d'utilisation alternant deux étapes, chargement de la capacité 4 hors phase d'injection, et décharge pendant la phase d'injection, présente plusieurs inconvénients. Un premier inconvénient est lié à la durée de la phase d'injection qui peut atteindre entre 500µs et 5ms relativement à la durée du cycle complet. Le convertisseur DC/DC 3 est désactivé durant toute cette phase, et le convertisseur DC/AC 6 vient alors puiser une énergie importante dans la capacité 4. Ceci entraîne une chute progressive de la tension intermédiaire 5 qui devient importante. Cette tension intermédiaire 5 devenue très faible peut nécessiter un temps important pour être rechargée, ce temps n'étant pas nécessairement disponible avant le début de la prochaine phase d'injection.

Un second inconvénient est lié au principe de fonctionnement du convertisseur DC/AC 6. Si la tension intermédiaire 5 qui alimente le convertisseur DC/AC 6 varie trop, ce dernier perd de sa précision, et ne garantit plus les caractéristiques du signal final 9.

Il apparaît donc souhaitable de palier à ces inconvénients en maintenant une tension intermédiaire 5 la plus stable possible afin de pouvoir moduler l'amplitude du train d'impulsion de tension final 9 en sortie du convertisseur DC/AC 6 aussi précisément que possible.

La présente invention remédie à ces différents inconvénients, et a pour objet un dispositif de commande d'injecteur piézoélectrique ultrasonore doté d'un générateur de train d'impulsion de tension comprenant une source de tension fournissant une tension initiale continue, un convertisseur DC/DC alimenté par la tension initiale, et apte à charger une capacité selon une tension intermédiaire continue supérieure à la tension initiale, un convertisseur DC/AC, fonctionnant par découpage, en alternant des phases actives et des phases inactives, apte à transformer la tension intermédiaire issue de la capacité en un train d'impulsion de tension final, et une unité de commande assurant le pilotage des convertisseurs. Selon une caractéristique de l'invention le convertisseur DC/DC est apte à fonctionner, afin de charger la capacité, en même temps que le convertisseur DC/AC, au plus durant les phases inactives de découpage du convertisseur DC/AC, le train d'impulsion de tension final commandant au moins un injecteur piézoélectrique ultrasonore durant la phase d'injection.

L'invention a encore pour objet un procédé d'utilisation d'un tel dispositif de commande d'injecteur piézoélectrique ultrasonore, comprenant une étape de maintien, en phase d'injection, durant laquelle les deux convertisseurs fonctionnent en opposition de phase, l'un des convertisseurs étant en phase active au plus durant la phase inactive de l'autre convertisseur et réciproquement, afin de commander un injecteur piézoélectrique ultrasonore.

Un avantage du dispositif selon l'invention est de permettre l'utilisation des phases inactives du convertisseur DC/AC pour faire fonctionner le convertisseur DC/DC et ainsi recharger plus régulièrement et durant un temps plus long la capacité.

En raison du fonctionnement en deux phases tel que décrit, une certaine ondulation résiduelle de la tension intermédiaire peut être observée. Cependant, l'amplitude de cette ondulation est directement liée à la valeur de la capacité et peut avantageusement être réduite en augmentant la valeur de ladite capacité.

Un autre avantage du dispositif selon l'invention est de permettre au convertisseur DC/AC de moduler instantanément la tension aux bornes de l'injecteur, du fait d'une tension intermédiaire stable et régulée, et ainsi, de produire une qualité et une finesse de pilotage accrue.

Un autre avantage du dispositif selon l'invention, est de beaucoup moins solliciter la capacité. Plus les fluctuations de tension aux bornes d'une capacité sont faibles et moins il est nécessaire d'énergie, pour pouvoir la recharger à une consigne de tension voulue. Les appels de courant sont aussi plus faibles. Le contrôle de la tension intermédiaire permet ainsi de gagner en dynamique et en temps de recharge de la capacité. La puissance absorbée sur le réseau de bord est ainsi moins importante. L'étage convertisseur DC/DC peut être mieux dimensionné, avec un rendement augmenté et un coût moindre. Il a été indiqué précédemment qu'une forte valeur de capacité est nécessaire pour réduire l'ondulation résiduelle de la tension intermédiaire. Cependant, avantageusement, la capacité n'a pas besoin d'être surdimensionnée en terme de courant rms.

D'autres caractéristiques, détails et avantages de l'invention ressortiront plus clairement de la description détaillée donnée ci-après à titre indicatif en relation avec des dessins sur lesquels :
- la figure 1 illustre un dispositif de commande d'injecteur piézoélectrique ultrasonore dans son contexte d'utilisation,
- la figure 2 illustre un mode de réalisation particulier d'un tel dispositif de commande,
- la figure 3 illustre un chronogramme d'une utilisation d'un dispositif de commande d'injecteur piézoélectrique ultrasonore,
- la figure 4 illustre ce même chronogramme pour un mode de réalisation particulier.

La figure 1, déjà décrite en relation avec l'art antérieur, présente selon l'invention, un dispositif de commande 12 comprenant un générateur 11 de train d'impulsion de tension comprenant une source de tension 1 fournissant une tension initiale 2 continue, un convertisseur DC/DC 3 alimenté par la tension initiale 2, et apte à charger une capacité 4 selon une tension intermédiaire 5 continue supérieure à la tension initiale 2, un convertisseur DC/AC 6, fonctionnant par découpage, en alternant des phases actives 7 et des phases inactives 8, apte à transformer la tension intermédiaire 2 issue de la capacité 4 en un train d'impulsion de tension final 9, et une unité de commande 10 assurant le pilotage des convertisseurs 3, 6. Selon l'invention, le convertisseur DC/DC 3 est apte à fonctionner, afin de charger la capacité 4, en même temps que le convertisseur DC/AC 6, au plus durant les phases inactives 8 de découpage du convertisseur DC/AC 6. En effet, le convertisseur DC/AC 6 fonctionnant selon le principe du découpage va présenter une succession de phases actives 7 et inactives 8. Du fait même de ce principe, le convertisseur DC/AC 6 court-circuite la capacité 4 à travers une inductance, au moyen d'un transistor, durant une phase active 7. Mais durant une phase inactive 8, ce transistor est bloqué. Ce blocage peut être mis à profit pour recharger ladite capacité 4 en faisant fonctionner le convertisseur DC/DC 3 durant tout ou partie, soit pendant au plus la durée complète, d'une phase inactive 8. Il serait possible de n'utiliser que certaines parmi les phases inactives 8.

Un convertisseur est dit actif lorsque ledit convertisseur puise de l'énergie sur sa source. A contrario, un convertisseur est dit passif ou inactif lorsque l'énergie stockée est transférée vers l'aval.

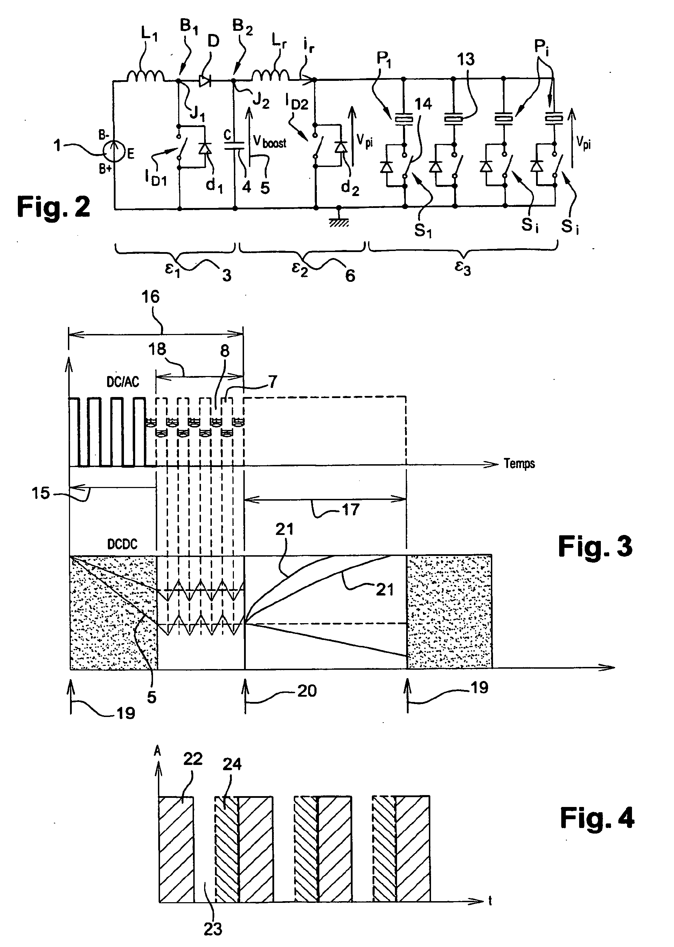

La figure 2, reprise de FR 04 13277, illustre un mode de réalisation particulier de dispositif de commande 12. Les différents étages du générateur d'impulsion 11 / dispositif de commande 12 d'injecteur piézoélectrique ultrasonore sont figurés de gauche à droite. Une batterie E est une source de tension 1. L'ensemble de composants comprenant une inductance L1, une diode D et un commutateur ID1 couplé à une diode d1 constituent, avec une capacité C, 4 en sortie, le convertisseur DC/DC 3, encore repéré ε1. L'ensemble de composants comprenant une inductance Lr et un commutateur ID2 couplé à une diode d2 constituent le convertisseur DC/AC 6, encore repéré ε2. Ces trois sous ensembles constituent, avec une unité de commande 10 non représentée, un générateur de train d'impulsion de tension 11. Les commutateurs fonctionnels ID1 et ID2 sont avantageusement des transistors afin de pouvoir être commandés. L'unité de commande 10 a pour fonction la commande de ces transistors, qui permet le découpage et donc la réalisation des fonctions DC/DC et DC/AC par pilotage respectivement des commutateurs ID1 et ID2.

Ledit générateur 11 est complété par un troisième étage ε3 comprenant un sélecteur 14, Si, d'injecteur. Le générateur 11 et l'ensemble sélecteur 14 constituent un dispositif de commande 12. Chaque sélecteur Si est associé à un injecteur 13 respectif. Ainsi, l'ouverture de tous les sélecteurs Si sauf celui d'un injecteur 13 donné, provoque l'envoi du train d'impulsion de tension 9 produit par le générateur 11 vers ledit injecteur 13 donné, et commande l'injection.

Le sélecteur 14 assure ainsi un rôle de multiplexeur dans un montage avec un générateur 11 et une pluralité d'injecteurs 13. Il est encore possible de supprimer le sélecteur 14 en utilisant un générateur 11 associé à chaque injecteur 13. Mais un tel arrangement n'est pas intéressant économiquement, et le montage multiplexé est préféré. Un tel montage multiplexé a cependant pour inconvénient de diminuer le temps disponible entre deux injections, d'autant plus faible que le nombre d'injecteurs 13 est important. Le convertisseur DC/DC 3, ne dispose, si l'on se limite à l'art antérieur, pour recharger la capacité 4, que du temps entre la fin d'une injection pour un injecteur 13 et le début de l'injection de l'injecteur suivant. Ici encore, l'invention qui permet le chargement de la capacité 4 pendant la durée de fonctionnement du convertisseur DC/AC 6, apparaît très avantageuse.

A l'instar du convertisseur DC/AC 6, le convertisseur DC/DC 3 peut aussi fonctionner par découpage. Un exemple d'un tel convertisseur est donné dans le montage précédemment décrit en relation avec la figure 2. Le découpage du convertisseur DC/DC 3, commandé par l'unité de commande 10, s'effectue avantageusement selon une fréquence de découpage identique à celle du convertisseur DC/AC 6, les deux convertisseurs fonctionnant en opposition de phase, l'un des convertisseurs (DC/DC, respectivement DC/AC) étant en phase active 7 au plus durant la phase inactive 8 de l'autre convertisseur (DC/AC, respectivement DC/DC). Ainsi le circuit du convertisseur DC/AC n'est jamais actif en même temps que le circuit du convertisseur DC/DC. Selon le mode de réalisation de la figure 2, les commutateurs ID1 et ID2 ne sont jamais fermés simultanément. Les phases actives de chacun des convertisseurs 3, 6 sont entrelacées.

En se référant à la figure 3 est décrit un chronogramme de fonctionnement du générateur 11 / dispositif de commande 12. Le chronogramme présente en fonction du temps, en partie basse le comportement du convertisseur DC/DC 3 et en partie haute le comportement du convertisseur DC/AC 6. Le diagramme est périodique, la période étant limitée entre deux instants de début d'injection 19. La durée de la phase d'injection est typiquement comprise entre 0,5 et 5 ms. A l'instant 19 de début d'injection débute une phase d'injection 18, se terminant à l'instant 20 de fin d'injection, et suivie d'une phase de rechargement 17.

Durant la phase d'injection 18, est réalisée une phase de maintien 16. Durant cette phase de maintien 16 les deux convertisseurs 3, 6 fonctionnent en opposition de phase, l'un des convertisseurs 3, 6 étant en phase active 7 au plus durant la phase inactive 8 de l'autre convertisseur 6, 3 et réciproquement. Le convertisseur DC/AC 6 fonctionne en découpage en alternant les phases actives 7 et les phases inactives 8 selon une fréquence de découpage déterminée, par exemple égale à 45KHz. Le rapport cyclique est par exemple de 0,5. Le convertisseur DC/DC 3 met à profit les phases inactives 8 du convertisseur DC/AC 6 pour fonctionner. Dans le cas d'un convertisseur DC/DC 3 à découpage, ses propres phases actives sont incluses dans les phases inactives 8 du convertisseur DC/AC 6. Ainsi la tension intermédiaire 5, durant la phase de maintien 16 présente des ondulations : elle diminue durant une phase active 7 du convertisseur DC/AC 6 qui décharge la capacité 4 et elle augmente durant une phase inactive 8 du convertisseur DC/AC 6, le convertisseur DC/DC 3 chargeant ladite capacité 4. La tension intermédiaire 5 reste ainsi sensiblement constante durant la phase de maintien.

La phase de maintien 16 peut se superposer entièrement avec la phase d'injection 18. Alternativement, pour des problématiques plus particulièrement développées dans FR 04 13277, afin de réguler des phénomènes transitoires, la phase de maintien 16 peut avantageusement être précédée d'une phase d'activation 15, en début de phase d'injection 18. Durant cette phase d'activation 15, le convertisseur DC/DC 3 reste inactif, tandis que le convertisseur DC/AC 6 fonctionne. Dans cette phase la tension intermédiaire 5 décroît. Cette phase d'activation 15 reste courte relativement à la phase de maintien 16 et dure typiquement entre 20 et 200 µs.

Après la phase d'injection 18 se déroulé une phase de rechargement 17, durant laquelle le convertisseur DC/DC 3 fonctionne afin de recharger la capacité 4, tandis que le convertisseur DC/AC 6 ne fonctionne pas. Cette phase débute en fin d'injection 20 d'un injecteur 13 et se termine au début d'injection 19 de l'injecteur 13 suivant dans la séquence d'injection.

Durant la phase de rechargement 17, la tension intermédiaire 5 augmente selon un profil 21 dépendant des caractéristiques du convertisseur DC/DC 3 et de son pilotage. Ainsi dans le cas d'un convertisseur DC/DC à découpage, l'unité de commande peut faire varier plusieurs caractéristiques du convertisseur DC/DC 3. Ceci s'effectue indépendamment du convertisseur DC/AC 6 qui est inactif, et donc indépendamment de la fréquence de résonance des injecteurs 13. L'unité de commande 10 détermine ainsi une fréquence de découpage. Une valeur typique est de 100 kHz. Afin d'obtenir la valeur de tension intermédiaire 5 nécessaire au fonctionnement du convertisseur DC/AC au début du cycle d'injection suivant, l'unité de commande 10 peut faire varier le rapport cyclique du découpage, typiquement entre 0 et 0,9. Elle peut encore faire varier la durée de fonctionnement. Ainsi si la capacité 4 est suffisamment rechargée avant le début d'injection 19 suivant, le pilotage du convertisseur DC/DC peut être stoppé.

En référence à la figure 4 est illustré un mode de réalisation avantageux. Le chronogramme de la figure 4 indique en fonction du temps les phases d'activités relatives du convertisseur DC/AC 6 et du convertisseur DC/DC 3. Ainsi un des convertisseurs 3, 6, est actif dans une phase 22 et inactif dans une phase 23. L'autre convertisseur 6, 3, est actif 24, avec avantageusement une activité 24 positionnée en fin de phase d'inactivité 23 du premier convertisseur 3, 6.

## Revendications

1. Dispositif de commande d'injecteur piézoélectrique ultrasonore, ledit dispositif comportant au moins un générateur de train d'impulsion de tension (11) comprenant une source de tension (1) fournissant une tension initiale (2) continue, un convertisseur DC/DC (3) alimenté par la tension initiale (2), et apte à charger une capacité (4) selon une tension intermédiaire (5) continue supérieure à la tension initiale (2), un convertisseur DC/AC (6), fonctionnant par découpage, en alternant des phases actives (7) et des phases inactives (8), apte à transformer la tension intermédiaire (5) issue de la capacité (4) en un train d'impulsion de tension final, et une unité de commande (10) assurant le pilotage des convertisseurs (3, 6), **caractérisé en ce que** le convertisseur DC/DC (3) est apte à fonctionner, afin de charger la capacité (4), en même temps que le convertisseur DC/AC (6), au plus durant les phases inactives (8) de découpage du convertisseur DC/AC (6), le train d'impulsion de tension final commandant au moins un injecteur piézoélectrique ultrasonore (13) durant la phase d'injection.

2. Dispositif selon la revendication 1, où le convertisseur DC/DC (3) fonctionne par découpage, selon une fréquence de découpage identique à celle du convertisseur DC/AC (6), les deux convertisseurs (3, 6) fonctionnant en opposition de phase, l'un des convertisseurs (3, 6) étant en phase active (7) au plus durant la phase inactive (8) de l'autre convertisseur (6, 3) et réciproquement.

3. Dispositif selon la revendication 1 ou 2, comprenant encore un sélecteur (14) d'injecteur permettant d'envoyer le train d'impulsion de tension final issu du générateur de train d'impulsion de tension (11) à un injecteur (13) déterminé parmi une pluralité d'injecteurs.

4. Dispositif selon la revendication 1 ou 2, comprenant encore un générateur de train d'impulsion de tension (11) associé à chaque injecteur (13).

5. Procédé d'utilisation d'un dispositif de commande (12) d'injecteur piézoélectrique ultrasonore selon l'une quelconque des revendication 1 à 4, comprenant une étape de maintien (16), en phase d'injection (18), durant laquelle les deux convertisseurs (3, 6) fonctionnent en opposition de phase, l'un des convertisseurs (3, 6) étant en phase active (7) au plus durant la phase inactive (8) de l'autre convertisseur (6, 3) et réciproquement, afin de commander un injecteur piézoélectrique ultrasonore (13).

6. Procédé selon la revendication 5, comprenant encore, avant l'étape de maintien (16), une étape d'activation (15), en début (19) de phase d'injection (18), durant laquelle le convertisseur DC/DC (3) ne fonctionne pas, tandis que le convertisseur DC/AC (6) fonctionne afin d'activer un injecteur piézoélectrique ultrasonore (13).

7. Procédé selon la revendication 5 ou 6, comprenant encore, après l'étape de maintien (16), une étape de rechargement (17) de la capacité (4), hors phase d'injection (18), durant laquelle le convertisseur DC/DC (3) fonctionne afin de recharger la capacité (4), tandis que le convertisseur DC/AC (6) ne fonctionne pas.

8. Procédé selon la revendication 7, où le découpage du convertisseur DC/DC (3) présente un rapport cyclique et/ou une durée de fonctionnement variables afin de varier le rechargement en fonction de la tension intermédiaire (5) souhaitée et du temps disponible avant la prochaine phase d'injection (18).

9. Procédé selon l'une quelconque des revendications 5 à 8, où un des convertisseurs (3, 6) est en phase active (24) en fin de la phase inactive (23) de l'autre convertisseur (6, 3) et réciproquement.

## Claims

1. Ultrasound piezoelectric injector control device, said device including at least one voltage pulse train generator comprising a voltage source (1) supplying an initial DC voltage (2), a DC/DC converter (3) powered by the initial voltage (2) and able to charge a capacitor (4) to an intermediate DC voltage (5) greater than the initial voltage (2), a DC/AC converter (6) operating in switched mode by alternating active phases (7) and inactive phases (8), able to transform the intermediate voltage (5) obtained from the capacitor (4) into a final voltage pulse train, and a control unit (10) for driving the converters (3, 6), **characterized in that** the DC/DC converter (3) is able to operate, in order to charge the capacitor (4), at the same time as the DC/AC converter (6), at most during the inactive switching phases (8) of the DC/AC converter (6), the final voltage pulse train (9) controlling at least one ultrasound piezoelectric injector (13) during the injection phase.

2. Device according to Claim 1, in which the DC/DC converter (3) operates in switched mode, with a switching frequency identical to that of the DC/AC converter (6), the two converters (3, 6) operating in phase opposition, one of the converters (3, 6) being in the active phase (7) at most during the inactive phase (8) of the other converter (6, 3), and vice versa.

3. Device according to Claim 1 or 2, also comprising an injector selector (14) for sending the final voltage pulse train obtained from the voltage pulse train generator (11) to a predetermined injector (13) of a plurality of injectors.

4. Device according to Claim 1 or 2, also comprising a voltage pulse train generator (11) associated with each injector (13).

5. Method of using an ultrasound piezoelectric injector control device (12) according to any one of Claims 1 to 4, comprising a holding step (16), in the injection phase (18), during which the two converters (3, 6) operate in phase opposition, one of the converters (3, 6) being in the active phase (7) at most during the inactive phase (8) of the other converter (6, 3), and vice versa, in order to control an ultrasound piezoelectric injector (13).

6. Method according to Claim 5, also comprising, before the holding step (16), an activation step (15), at the start (19) of the injection phase (18), during which the DC/DC converter (3) does not operate, while the DC/AC converter (6) operates in order to activate an ultrasound piezoelectric injector (13).

7. Method according to Claim 5 or 6, also comprising, after the holding step (16), a step (17) of recharging the capacitor (4), outside the injection phase (18), during which the DC/DC converter (3) operates in order to recharge the capacitor (4), while the DC/AC converter (6) does not operate.

8. Method according to Claim 7, in which the switching of the DC/DC converter (3) exhibits a duty cycle and/or an operating time that are variable in order to vary the recharging as a function of the desired intermediate voltage (5) and of the time available before the next injection phase (18).

9. Method according to any one of Claims 5 to 8, in which one of the converters (3, 6) is in active phase (24) at the end of the inactive phase (23) of the other converter (6, 3), and vice versa.

## Patentansprüche

1. Vorrichtung für die Steuerung einer piezoelektrischen Ultraschalleinspritzeinrichtung, wobei die Vorrichtung wenigstens einen Generator (11) für Spannungsimpulszüge umfasst, der seinerseits umfasst: eine Spannungsquelle (1), die eine anfängliche Gleichspannung (2) liefert, einen Gleichstrom/Gleichstrom-Wandler (3), der durch die Anfangsspannung (2) versorgt wird und einen Kondensator (4) mit einer Zwischengleichspannung (5), die höher als die anfängliche Spannung (2) ist, laden kann, einen Gleichstrom/Wechselstrom-Wandler (6), der durch Zerteilen funktioniert, indem er zwischen aktiven Phasen (7) und inaktiven Phasen (8) hin und her wechselt, und die von dem Kondensator (4) ausgegebene Zwischenspannung (5) in einen endgültigen Spannungsimpulszug transformiert, und eine Steuereinheit (10), die die Steuerung der Wandler (3, 6) sicherstellt, **dadurch gekennzeichnet, dass** der Gleichstrom/Gleichstrom-Wandler (3), um den Kondensator (4) zu laden, höchstens während der inaktiven Phasen (8) des Zerteilens des Gleichstrom/Wechselstrom-Wandlers (6) gleichzeitig mit dem Gleichstrom/Wechselstrom-Wandler (6) arbeiten kann, wobei der endgültige Spannungsimpulszug während der Einspritzphase wenigstens eine piezoelektrische Ultraschalleinspritzeinrichtung (13) steuert.

2. Vorrichtung nach Anspruch 1, wobei der Gleichstrom/Gleichstrom-Wandler (6) durch Zerteilen mit einer Zerteilungsfrequenz arbeitet, die gleich jener des Gleichstrom/Wechselstrom-Wandlers (6) ist, wobei die zwei Wandler (3, 6) mit entgegengesetzter Phase arbeiten, wobei einer der Wandler (3, 6) höchstens während der inaktiven Phase (8) des anderen Wandlers (6, 3) in der aktiven Phase (7) ist und umgekehrt.

3. Vorrichtung nach Anspruch 1 oder 2, die außerdem eine Einspritzeinrichtungs-Wähleinrichtung (14) umfasst, die ermöglicht, den endgültigen Spannungsimpulszug, der von dem Spannungsimpulszug-Generator (11) ausgegeben wird, zu einer bestimmten Einspritzeinrichtung (13) unter mehreren Einspritzeinrichtungen zu schicken.

4. Vorrichtung nach Anspruch 1 oder 2, die außerdem einen Spannungsimpulszug-Generator (11) umfasst, der jeder Einspritzeinrichtung (13) zugeordnet ist.

5. Verfahren der Verwendung einer Vorrichtung (12) zum Steuern einer piezoelektrischen Ultraschalleinspritzeinrichtung nach einem der Ansprüche 1 bis 4, das einen Halteschritt (16) in der Einspritzphase (18) umfasst, währenddessen die zwei Wandler (3, 6) mit entgegengesetzter Phase arbeiten, wobei einer der Wandler (3, 6) höchstens während der inaktiven Phase (8) des anderen Wandlers (6, 3) in der aktiven Phase (7) ist und umgekehrt, um eine piezoelektrische Ultraschalleinspritzeinrichtung (13) zu steuern,.

6. Verfahren nach Anspruch 5, das außerdem vor dem Halteschritt (16) am Beginn (19) der Einspritzphase (18) einen Aktivierungsschritt (15) umfasst, währenddessen der Gleichstrom/Gleichstrom-Wandler (3) nicht arbeitet, während der Gleichstrom/Wechselstrom-Wandler (6) arbeitet, um eine piezoelektrische Ultraschalleinspritzeinrichtung (13) zu aktivieren, .

7. Verfahren nach Anspruch 5 oder 6, das außerdem nach dem Halteschritt (16) außerhalb der Einspritzphase (18) einen Schritt (17) zum Wiederaufladen des Kondensators (4) umfasst, währenddessen der Gleichstrom/
Gleichstrom-Wandler (3) arbeitet, um den Kondensator (4) wieder aufzuladen, während der Gleichstrom/Wechselstrom-Wandler (6) nicht arbeitet.

8. Verfahren nach Anspruch 7, wobei das Zerteilen des Gleichstrom/Gleichstrom-Wandlers (3) ein Tastverhältnis und/oder eine Funktionsdauer besitzt, die variabel sind, um das Wiederaufladen als Funktion der gewünschten Zwischenspannung (5) und der vor der nächsten Einspritzphase (18) verfügbaren Zeit zu verändern.

9. Verfahren nach einem der Ansprüche 5 bis 8, wobei einer der Wandler (3, 6) am Ende der inaktiven Phase (23) des anderen Wandlers (6, 3) in der aktiven Phase (24) ist und umgekehrt.
